# EUROPÄISCHE PATENTSCHRIFT

(11) **EP 3 118 049 B1**
(45) Veröffentlichungstag und Bekanntmachung des Hinweises auf die Patenterteilung: **20.04.2022**
(21) Anmeldenummer: 16001491.6
(22) Anmeldetag: 05.07.2016
(51) Int. Cl.: B60K 37/06

(54) **VORRICHTUNG UND VERFAHREN ZUR UNTERSTÜTZUNG EINES FAHRERS EINES FAHRZEUGS, INSBESONDERE EINES NUTZFAHRZEUGS**
DEVICE AND METHOD FOR SUPPORTING A DRIVER OF A VEHICLE, IN PARTICULAR A COMMERCIAL VEHICLE
PROCÉDÉ ET DISPOSITIF D'ASSISTANCE À UN CONDUCTEUR D'UN VÉHICULE AUTOMOBILE, EN PARTICULIER UN VÉHICULE UTILITAIRE

(30) Priorität: 11.07.2015 DE 102015009027
(43) Veröffentlichungstag der Anmeldung: 18.01.2017
(73) Patentinhaber: MAN Truck & Bus SE, 80995 München (DE)
(72) Erfinder: Adlhart, Helmut, 81825 München (DE); Mohra, Holger, 80805 München (DE); Fritz, Maria, 80637 München (DE); Eisner, Johannes, 81371 München (DE); Glohr, Tobias, 80336 München (DE); Wahn, Nina Alexandra, 82140 Olching (DE); Wenninger, Dominik, 84576 Teising (DE); Wölfel, Christiane, 82418 Hofheim (DE); Zipf, Christoph, 97922 Gerlachsheim (DE)
(74) Vertreter: Liebl, Thomas

(56) Entgegenhaltungen:
- EP-A1- 2 017 116
- DE-A1-102014 013 268

## Beschreibung

Die Erfindung betrifft eine Vorrichtung zur Unterstützung eines Fahrers eines Fahrzeugs, insbesondere eines Nutzfahrzeugs, nach dem Oberbegriff des Patentanspruches 1, ein Verfahren zur Unterstützung eines Fahrers eines Fahrzeugs, insbesondere eines Nutzfahrzeugs, nach dem Oberbegriff des Patentanspruches 12 sowie ein Fahrzeug, insbesondere ein Nutzfahrzeug, mit der Vorrichtung und/oder zur Durchführung des Verfahrens nach Patentanspruch 13.

Es ist bekannt, bei einem Fahrzeug ein Bedienfeld vorzusehen, das mehrere durch einen Fahrer des Fahrzeugs betätigbare Bedienelemente, beispielsweise Taster und/oder Schalter, aufweist. Jedem Bedienelement dieses Bedienfelds ist wenigstens eine Fahrzeugfunktion zugeordnet, die durch Betätigung des jeweiligen Bedienelements bedient werden kann. Die Fahrzeugfunktionen können beispielsweise durch Klimaanlagen-Funktionen gebildet sein, mittels denen eine Klimaanlage des Fahrzeugs wie gewünscht eingestellt bzw. verstellt werden kann. Weiter können die Fahrzeugfunktionen beispielsweise auch durch Infotainment-Funktionen gebildet sein, mittels denen ein Infotainmentsystem des Fahrzeugs eingestellt bzw. verstellt werden kann. Des Weiteren ist es auch bekannt, das Bedienfeld mittels einer Beleuchtungseinrichtung zu beleuchten, damit der Fahrer des Fahrzeugs das Bedienfeld, insbesondere bei einer Nachtfahrt, schnell und einfach auffinden kann.

Trotz der Beleuchtung des Bedienfelds ist es für den Fahrer des Fahrzeugs häufig schwierig, das richtige bzw. das gewünschte Bedienelement des Bedienfelds schnell aufzufinden. Insbesondere ist es für den Fahrer schwierig, das gewünschte Bedienelement des Bedienfelds zu finden, ohne vom Straßenverkehr abgelenkt zu werden.

Aufgabe der Erfindung ist es daher, eine Vorrichtung und ein Verfahren zur Unterstützung eines Fahrers eines Fahrzeugs, insbesondere eines Nutzfahrzeugs, bereitzustellen, mittels denen die Betätigung des Bedienfelds vereinfacht wird.

Diese Aufgabe wird durch die Merkmale der unabhängigen Patentansprüche gelöst. Bevorzugte Weiterbildungen sind in den Unteransprüchen offenbart.

Gemäß Patentanspruch 1 wird eine Vorrichtung zur Unterstützung eines Fahrers eines Fahrzeugs, insbesondere eines Nutzfahrzeugs, vorgeschlagen, mit einem mehrere Bedienelemente aufweisenden Bedienfeld, wobei die Bedienelemente durch den Fahrer betätigt werden können, wobei jedem Bedienelement wenigstens eine Fahrzeugfunktion zugeordnet ist, die durch Betätigung des Bedienelements bedient werden kann, und wobei eine Beleuchtungseinrichtung vorgesehen ist, mittels der das Bedienfeld zumindest bereichsweise beleuchtet werden kann. Erfindungsgemäß ist, insbesondere zur Vereinfachung der Betätigung des Bedienfelds, eine signaltechnisch mit der Beleuchtungseinrichtung verbundene Stelleinrichtung vorgesehen, mittels in Abhängigkeit von der aktuellen Verkehrssituation des Fahrzeugs und/oder in Abhängigkeit von wenigstens einem Fahrerbefehl und/oder in Abhängigkeit von dem aktuellen Fahrerzustand die Beleuchtung des Bedienfelds selbsttätig bzw. automatisch derart eingestellt und/oder verstellt werden kann, das wenigstens ein Bedienelement des Bedienfelds von dem wenigstens einen weiteren Bedienelement des Bedienfelds optisch hervorgehoben und/oder optisch abgehoben ist.

Auf diese Weise wird die Betätigung des Bedienfelds deutlich vereinfacht, da nun wenigstens ein Bedienelement des Bedienfelds von dem wenigstens einem weiteren Bedienelement des Bedienfelds optisch hervorgehoben wird, wenn dies vorteilhaft bzw. erforderlich ist. Das wenigstens eine optisch hervorgehobene Bedienelement des Bedienfelds kann dann besonders einfach und schnell vom Fahrer des Fahrzeugs aufgefunden werden.

Die Begrifflichkeit "Fahrzeugfunktion" ist hier ausdrücklich in einem weiten Sinne zu verstehen. So kann die Fahrzeugfunktion beispielsweise als Einstellfunktion zur Einstellung wenigstens eines definierten Parameters, beispielsweise der Lautstärke eines Infotainmentsystems des Fahrzeugs, ausgebildet sein. Ebenso kann die Fahrzeugfunktion beispielsweise auch als Auswahlfunktion zur Auswahl wenigstens eines Menüpunktes eines an einem Bildschirm des Fahrzeugs angezeigten Bedienmenüs ausgebildet sein.

In einer bevorzugten Ausgestaltung der erfindungsgemäßen Vorrichtung ist zur Ermittlung der aktuellen Verkehrssituation des Fahrzeugs eine signaltechnisch mit der Stelleinrichtung verbundene Positionsermittlungseinrichtung vorgesehen, mittels der die aktuelle Position des Fahrzeugs auf seiner Fahrstrecke selbsttätig ermittelt werden kann. Mittels einer derartigen Positionsermittlungseinrichtung kann beispielsweise ermittelt werden, ob sich das Fahrzeug an eine Mautstation annähert. Bei einer Annäherung an eine Mautstation kann dann mittels der Stelleinrichtung selbsttätig ein Bedienelement des Bedienfelds zur Bedienung der Beleuchtung des Fahrzeuginnenraums optisch von dem wenigstens einen weiteren Bedienelement des Bedienfelds hervorgehoben werden.

Alternativ und/oder zusätzlich zu der Positionsermittlungseinrichtung kann zur Ermittlung der aktuellen Verkehrssituation des Fahrzeugs auch wenigstens eine signaltechnisch mit der Stelleinrichtung verbundene Bild-Erfassungseinrichtung, insbesondere eine Kamera, vorgesehen, sein, mittels der die Umgebung des Fahrzeugs bildlich und/oder filmisch erfasst werden kann. Dadurch kann beispielsweise bei einer Panne des Fahrzeugs ein Bedienelement des Bedienfelds zur Bedienung einer Warnblinkanlange des Fahrzeugs optisch von dem wenigstens einen weiteren Bedienelement des Bedienfelds hervorgehoben werden.

Weiter alternativ und/oder zusätzlich kann zur Ermittlung der aktuellen Verkehrssituation des Fahrzeugs auch eine signaltechnisch mit der Stelleinrichtung verbundene Abstand-Erfassungseinrichtung vorgesehen sein, mittels der ein Abstand des Fahrzeugs zu wenigstens einem weiteren Fahrzeug erfasst werden kann. Die Abstand-Erfassungseinrichtung kann beispielsweise durch ein Radarsystem gebildet sein. Weiter kann zur Ermittlung der aktuellen Verkehrssituation des Fahrzeugs auch eine signaltechnisch mit der Stelleinrichtung verbundene Temperatur-Erfassungseinrichtung vorgesehen sein, mittels der die aktuelle Temperatur einer Brennkraftmaschine des Fahrzeugs erfasst werden kann.

Weiter bevorzugt ist zur Erfassung des Fahrerbefehls eine signaltechnisch mit der Stelleinrichtung verbundene Fahrerbefehl-Erfassungseinrichtung vorgesehen, mittels der wenigstens ein Fahrerbefehl zur optischen Hervorhebung wenigstens eines Bedienelements des Bedienfelds selbsttätig bzw. automatisch erfasst und/oder erkannt werden kann, wobei bei der Erfassung eines Fahrerbefehls zur optischen Hervorhebung wenigstens eines Bedienelements des Bedienfelds die Beleuchtung des Bedienfelds mittels der Stelleinrichtung selbsttätig bzw. automatisch derart eingestellt und/oder verstellt werden kann, dass das wenigstens eine, mittels des Fahrerbefehls erfasste Bedienelement von dem wenigstens einen weiteren Bedienelement des Bedienfelds optisch hervorgehoben und/oder optisch abgehoben ist. So kann die Betätigung des Bedienfelds auf einfache und effektive Weise mittels eines Fahrerbefehls vereinfacht werden.

Vorzugsweise weist die Fahrerbefehl-Erfassungseinrichtung eine Sprach-Erfassungseinrichtung auf, mittels der wenigstens ein Sprachbefehl des Fahrers erfasst werden kann. Über einen Sprachbefehl kann der Fahrerbefehl auf besonders einfache und komfortable Weise durch den Fahrer ausgegeben werden. Der Sprachbefehl kann dabei beispielsweise als direkter bzw. expliziter Sprachbefehl oder als indirekter bzw. impliziter Sprachbefehl ausgebildet sein. Ein direkter Sprachbefehl zur optischen Hervorhebung eines Bedienelements des Bedienfelds zur Einstellung bzw. Verstellung der Temperatur des Fahrzeuginnenraums könnte beispielsweise "Temperatureinstellung" lauten. Ein indirekter Sprachbefehl zur optischen Hervorhebung dieses Bedienelements könnte beispielsweise "mir ist kalt" oder "mir ist warm" lauten. Alternativ und/oder zusätzlich zu der Sprach-Erfassungseinrichtung kann die Fahrerbefehl-Erfassungseinrichtung auch eine Gesten-Erfassungseinrichtung aufweisen, mittels der wenigstens ein Gestenbefehl des Fahrers erfasst werden kann. Über einen Gestenbefehl kann der Fahrerbefehl ebenfalls auf einfache Weise durch den Fahrer ausgegeben werden.

Weiter bevorzugt ist zur Ermittlung des aktuellen Fahrerzustands eine signaltechnisch mit der Stelleinrichtung verbundene Körperzustand-Erfassungseinrichtung vorgesehen ist, mittels der wenigstens eine, insbesondere physiologische, Information über den aktuellen Körperzustand des Fahrers und/oder über den Körper des Fahrers erfasst werden kann. Bevorzugt ist dabei vorgesehen, dass die Körperzustand-Erfassungseinrichtung eine Temperatur-Erfassungseinrichtung aufweist, mittels der die Hauttemperatur des Fahrers und/oder die Innenraumtemperatur des Fahrzeugs erfasst werden kann. Mittels einer derartigen Temperatur-Erfassungseinrichtung kann der aktuelle Körperzustand des Fahrers auf einfache und aussagekräftige Weise bewertet werden. Sofern beispielsweise die Hauttemperatur des Fahrers einen definierten Temperatur-Grenzwert unterschreitet, kann mittels der Stelleinrichtung selbsttätig ein Bedienelement des Bedienfelds zur Einstellung bzw. Verstellung der Temperatur des Fahrzeuginnenraums optisch von dem wenigstens einen weiteren Bedienelement des Bedienfelds hervorgehoben werden.

Alternativ und/oder zusätzlich zu der Körperzustand-Erfassungseinrichtung kann zur Ermittlung des aktuellen Fahrerzustands auch eine signaltechnisch mit der Stelleinrichtung verbundene Stimmung-Erfassungseinrichtung vorgesehen sein, mittels der die Stimmung des Fahrers erfasst und/oder erkannt werden kann. Mittels einer derartigen Stimmung-Erfassungseinrichtung kann der aktuelle Zustand des Fahrers ebenfalls aussagekräftig bewertet werden. Bevorzugt ist dabei vorgesehen, dass die Stimmung-Erfassungseinrichtung eine Fahrermimik-Erfassungseinrichtung aufweist, mittels der die Mimik des Fahrers erfasst und/oder erkannt werden kann. Weiter bevorzugt weist die Stimmung-Erfassungseinrichtung eine Fahrweise-Erfassungseinrichtung auf, mittels der die Fahrweise des Fahrers erfasst oder erkannt werden kann.

In einer bevorzugten konkreten Ausgestaltung ist jedes Bedienelement des Bedienfelds durch eine Taste gebildet, um das Bedienfeld einfach und kompakt auszubilden. Bevorzugt ist dabei vorgesehen, dass die Tasten des Bedienfelds druckbetätigbar und/oder durch Berührung betätigbar sind.

Erfindungsgemäss ist das Bedienfeld durch ein druckbetätigbares Tastenfeld gebildet, das mehrere druckbetätigbare Tasten aufweist. Ein derart ausgebildetes Bedienfeld ist funktionssicher und kostengünstig. Alternativ kann das Bedienfeld aber auch durch ein durch Berührung betätigbares Tastenfeld gebildet, das mehrere durch Berührung betätigbare Tasten aufweist.

Vorzugsweise kann mittels der Beleuchtungseinrichtung wenigstens eine Taste des Bedienfelds beleuchtet werden. Bevorzugt ist dabei vorgesehen, dass mittels der Stelleinrichtung die Beleuchtung der wenigstens einen Taste eingestellt und/oder verstellt werden kann, um wenigstens eine Taste des Bedienfelds auf einfache und deutliche Weise von der wenigstens einen weiteren Taste des Bedienfelds optisch hervorheben zu können.

Bevorzugt kann mittels der Stelleinrichtung die Farbe und/oder die Helligkeit der Beleuchtung der wenigstens einen Taste verstellt und/oder eingestellt werden. Dadurch kann wenigstens eine Taste des Bedienfelds auf besonders deutliche Weise von der wenigstens einen weiteren Taste des Bedienfelds optisch hervorgehoben werden. Alternativ und/oder zusätzlich kann mittels der Stelleinrichtung auch die Beleuchtung der wenigstens einen Taste eingeschaltet und ausgeschaltet werden.

In einer weiteren bevorzugten Ausgestaltung ist das das Bedienfeld durch einen Touchscreen gebildet, wobei der Touchscreen mehrere Touchscreenbereiche aufweist, an denen jeweils ein Funktionssymbol anzeigbar ist, wobei durch Berührung eines Touchscreenbereichs eine dem Touchscreenbereich zugeordnete Fahrzeugfunktion bedient werden kann, und wobei jeder Touchscreenbereich eine durch Berührung betätigbare Taste ausbildet.

Vorzugsweise kann mittels der Stelleinrichtung die Form und/oder die Gestalt und/oder die Farbe und/oder die Helligkeit wenigstens eines Funktionssymbols des Touchscreens verstellt und/oder eingestellt werden. Dadurch kann das Funktionssymbol des Touchscreens auf einfache und deutliche Weise optisch von dem wenigstens einen weiteren Funktionssymbol des Touchscreens hervorgehoben werden.

Zur Lösung der bereits genannten Aufgabe wird ferner ein Verfahren zur Unterstützung eines Fahrers eines Fahrzeugs, insbesondere eines Nutzfahrzeugs, beansprucht, mit einem mehrere Bedienelemente aufweisenden Bedienfeld, wobei die Bedienelemente durch den Fahrer betätigt werden können, wobei jedem Bedienelement wenigstens eine Fahrzeugfunktion zugeordnet ist, die durch Betätigung des Bedienelements bedient werden kann, und wobei eine Beleuchtungseinrichtung vorgesehen ist, mittels der das Bedienfeld zumindest bereichsweise beleuchtet werden kann. Erfindungsgemäß ist, insbesondere zur Vereinfachung der Betätigung des Bedienfeldes, eine signaltechnisch mit der Beleuchtungseinrichtung verbundene Stelleinrichtung vorgesehen, mittels der in Abhängigkeit von der aktuellen Verkehrssituation des Fahrzeugs und/oder in Abhängigkeit von wenigstens einem Fahrerbefehl und/oder in Abhängigkeit von dem aktuellen Fahrerzustand die Beleuchtung des Bedienfelds selbsttätig bzw. automatisch derart eingestellt und/oder verstellt wird, dass wenigstens ein Bedienelement des Bedienfelds von dem wenigstens einen weiteren Bedienelement des Bedienfelds optisch hervorgehoben und/oder optisch abgehoben ist.

Die sich durch die erfindungsgemäße Verfahrensführung ergebenden Vorteile sind identisch mit den bereits gewürdigten Vorteilen der erfindungsgemäßen Vorrichtung, so dass diese an dieser Stelle nicht wiederholt werden.

Des Weiteren wird auch ein Fahrzeug, insbesondere ein Nutzfahrzeug, mit der erfindungsgemäßen Vorrichtung und/oder zur Durchführung des erfindungsgemäßen Verfahrens beansprucht. Die sich hieraus ergebenden Vorteile sind ebenfalls identisch mit den bereits gewürdigten Vorteilen der erfindungsgemäßen Vorrichtung, so dass diese hier ebenfalls nicht wiederholt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten und/oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer schematischen Darstellung einen Teil einer erfindungsgemäßen Vorrichtung;
- Fig. 2: eine schematische Darstellung, anhand der der Aufbau der erfindungsgemäßen Vorrichtung erläutert wird; und
- Fig. 3: in einer Darstellung gemäß Fig. 1 eine zweite Ausführungsform der erfindungsgemäßen Vorrichtung.

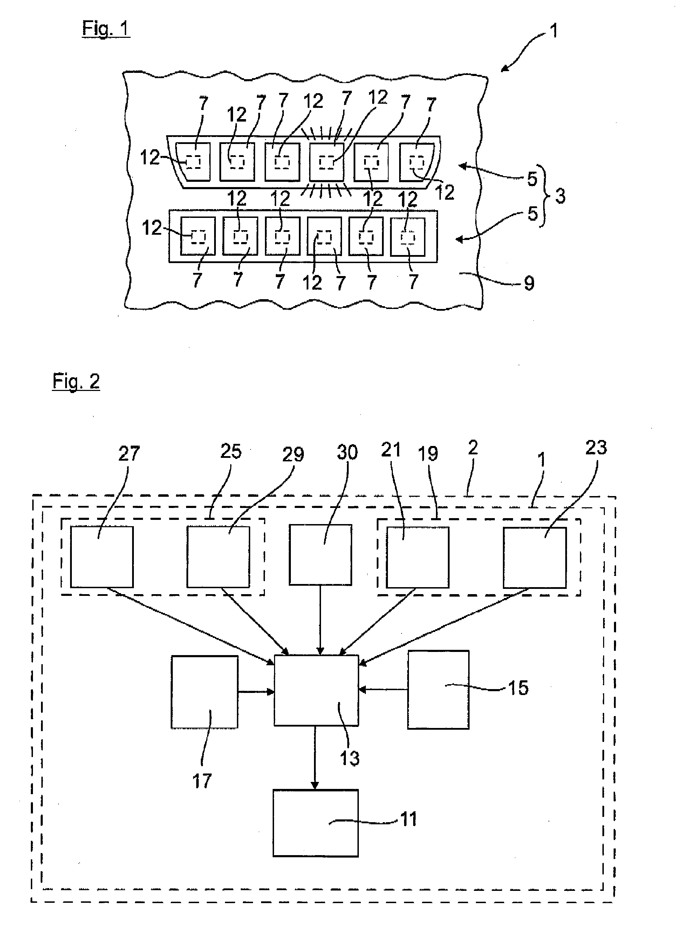

In Fig. 1 ist ein Teil einer ersten Ausführungsform einer erfindungsgemäßen Vorrichtung 1 eines Fahrzeugs 2 (Fig. 2) gezeigt. Die Vorrichtung 1 weist ein durch einen Fahrer des Fahrzeugs 2 druckbetätigbares Tastenfeld 3 auf, das hier beispielhaft zwei Tastenreihen 5 umfasst. Jede Tastenreihe 5 des Tastenfelds 3 weist mehrere druckbetätigbare Tasten 7 auf. Jeder Taste 7 des Tastenfelds 3 ist wenigstens eine Fahrzeugfunktion zugeordnet, die durch Betätigung der jeweiligen Taste 7 bedient werden kann. Weiter sind die Tasten 7 hier beispielhaft in ein Gehäuse 9 des Fahrzeugs 2 eingefasst.

Wie in Fig. 2 gezeigt ist, weist die Vorrichtung 1 eine Beleuchtungseinrichtung 11 auf, mittels der die Tasten 7 des Tastenfelds 3 beleuchtet werden können. Die Beleuchtungseinrichtung 11 weist hier beispielhaft mehrere in Fig. 1 mit gestrichelten Linien angedeutete Leuchtmittel 12 auf. Jeder Taste 7 ist hier beispielhaft ein Leuchtmittel 12 zugeordnet. Die Leuchtmittel 12 sind hier beispielhaft durch Leuchtdioden (LED) gebildet.

Gemäß Fig. 2 ist die Beleuchtungseinrichtung 11 signaltechnisch mit einer Stelleinrichtung 13 verbunden. Mittels der Stelleinrichtung 13 wird hier beispielhaft in Abhängigkeit von der aktuellen Verkehrssituation des Fahrzeugs 2 und in Abhängigkeit von mehreren Fahrerbefehlen und in Abhängigkeit von dem aktuellen Fahrerzustand die Beleuchtung des Tastenfelds 3 selbsttätig bzw. automatisch derart eingestellt und/oder verstellt, dass wenigstens eine Taste 7 des Tastenfelds 3 von der wenigstens einen weiteren Taste 7 des Tastenfelds 3 optisch hervorgehoben und/oder optisch abgehoben ist. Zur Einstellung bzw. Verstellung der Beleuchtung der Tasten 7 wird hier beispielhaft die Beleuchtung definierter Tasten 7 des Tastenfelds 3 eingeschaltet oder ausgeschaltet. Alternativ wäre es beispielsweise auch denkbar zur Verstellung der Beleuchtung der Tasten 7 die Farbe und/oder die Helligkeit der Beleuchtung der Tasten 7 zu verstellen.

Wie in Fig. 2 weiter gezeigt ist, ist die Stelleinrichtung 13 hier beispielhaft signaltechnisch mit einer Positionsermittlungseinrichtung 15 der Vorrichtung 1 verbunden, mittels der die aktuelle Position des Fahrzeugs auf seiner Fahrstrecke ermittelt werden kann. Zudem ist die Stelleinrichtung 13 hier beispielhaft auch signaltechnisch mit einer Bild-Erfassungseinrichtung 17 der Vorrichtung 1 verbunden, mittels der die Umgebung des Fahrzeugs bildlich und/oder filmisch erfasst werden kann. Die Bild-Erfassungseinrichtung 17 kann beispielsweise als Kamera ausgebildet sein. Mittels der Positionsermittlungseinrichtung 15 und der Bild-Erfassungseinrichtung 17 wird hier die aktuelle Verkehrssituation des Fahrzeugs 2 ermittelt.

Weiter ist die Stelleinrichtung 13 hier beispielhaft auch signaltechnisch mit einer Fahrerbefehl-Erfassungseinrichtung 19 der Vorrichtung 1 verbunden, mittels der mehrere Fahrerbefehle zur optischen Hervorhebung wenigstens einer Taste 7 des Tastenfelds 3 selbsttätig bzw. automatisch erfasst und/oder erkannt werden kann. Die Fahrerbefehl-Erfassungseinrichtung 19 weist hier beispielhaft eine Sprach-Erfassungseinrichtung 21 auf, mittels der Sprachbefehle des Fahrers erfasst werden können. Zudem weist die Fahrerbefehl-Erfassungseinrichtung 19 hier beispielhaft auch eine Gesten-Erfassungseinrichtung 23 auf, mittels der Gestenbefehle des Fahrers erfasst werden können.

Des Weiteren ist die Stelleinrichtung 13 hier beispielhaft auch signaltechnisch mit einer Stimmung-Erfassungseinrichtung 25 der Vorrichtung 1 verbunden, mittels der die Stimmung des Fahrers erfasst und/oder erkannt werden kann. Die Stimmung-Erfassungseinrichtung 25 weist hier beispielhaft eine Fahrermimik-Erfassungseinrichtung 27 auf, mittels der die Mimik des Fahrers erfasst und/oder erkannt werden kann. Zudem weist die Stimmungs-Erfassungseinrichtung 25 hier beispielhaft eine Fahrweise-Erfassungseinrichtung 29 auf, mittels der die Fahrweise des Fahrers erfasst und/oder erkannt werden kann. Weiter ist die Stelleirichtung 13 hier beispielhaft auch signaltechnisch einer Temperatur-Messeinrichtung 30 verbunden, mittels der die Körpertemperatur des Fahrers messbar ist. Mittels der Stimmung-Erfassungseinrichtung 25 und der Temperatur-Messeinrichtung 30 wird hier der aktuelle Zustand des Fahrers ermittelt.

In Fig. 1 ist hier beispielhaft eine einzige Taste 7 des Tastenfelds 3 optisch von den weiteren Tasten 7 des Tastenfelds 3 hervorgehoben. Zur optischen Hervorhebung der Taste 7 wird hier lediglich die optisch hervorgehobene Taste 7 mittels der Beleuchtungseinrichtung 11 beleuchtet. Die weiteren Tasten 7 des Tastenfelds 3 werden nicht mittels der Beleuchtungseinrichtung 11 beleuchtet. Die optisch hervorgehobene Taste 7 kann beispielsweise als Taste 7 zur Einstellung einer Temperatur eines Fahrzeuginnenraums des Fahrzeugs 2 ausgebildet sein.

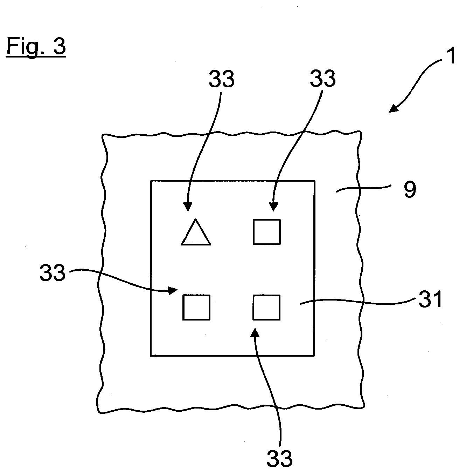

In Fig. 3 ist eine zweite Ausführungsform der Vorrichtung 1 gezeigt. Im Vergleich zu der in Fig. 1 gezeigten ersten Ausführungsform weist die zweite Ausführungsform der Vorrichtung 1 kein druckbetätigbares Tastenfeld 3, sondern einen Touchscreen 31 auf. Der Touchscreen 31 weist mehrere Touchscreenbereiche 33 auf, an denen jeweils ein Funktionssymbol angezeigt wird. Durch Berührung eines Touchscreenbereichs 33 kann eine dem jeweiligen Touchscreenbereich 33 zugeordnete Fahrzeugfunktion bedient werden. Jeder Touchscreenbereich 33 des Touchscreens 31 bildet hier somit eine durch Berührung betätigbare Taste aus. Des Weiteren wird hier beispielhaft zur optischen Hervorhebung wenigstens eines Touchscreenbereichs 33 des Touchscreens 31 von wenigstens einen weiteren Touchscreenbereich 33 des Touchscreens 31 die Gestalt wenigstens eines Funktionssymbols des Touchscreens 31 verstellt bzw. geändert.

In Fig. 3 wird hier beispielhaft mittels eines einzigen Touchscreenbereichs 33 des Touchscreens 31 ein Dreieck als Leuchtsymbol angezeigt. Mittels der weiteren Touchscreenbereiche 33 des Touchscreens 31 wird jeweils ein Viereck als Leuchtsymbol angezeigt. Somit ist hier der das Dreieck als Funktionssymbol anzeigende Touchscreenbereich 33 optisch von den weiteren Touchscreenbereichen 33 des Touchscreens 31 hervorgehoben.

### Bezugszeichenliste

- 1: Vorrichtung
- 2: Fahrzeug
- 3: Tastenfeld
- 5: Tastenreihe
- 7: Taste
- 9: Gehäuse
- 11: Beleuchtungseinrichtung
- 12: Leuchtmittel
- 13: Stelleinrichtung
- 15: Positionsermittlungseinrichtung
- 17: Bild-Erfassungseinrichtung
- 19: Fahrerbefehl-Erfassungseinrichtung
- 21: Sprach-Erfassungseinrichtung
- 23: Gesten-Erfassungseinrichtung
- 25: Stimmung-Erfassungseinrichtung
- 27: Fahrermimik-Erfassungseinrichtung
- 29: Fahrweise-Erfassungseinrichtung
- 30: Temperatur-Erfassungseinrichtung
- 31: Touchscreen
- 33: Touchscreenbereich

## Patentansprüche

1. Vorrichtung zur Unterstützung eines Fahrers eines Fahrzeugs, insbesondere eines Nutzfahrzeugs, mit einem mehrere Bedienelemente (7; 33) aufweisenden Bedienfeld (3; 31), wobei die Bedienelemente (7; 33) durch den Fahrer betätigbar sind, wobei jedem Bedienelement (7;33) wenigstens eine Fahrzeugfunktion zugeordnet ist, die durch Betätigung des Bedienelements (7; 33) bedienbar ist, wobei eine Beleuchtungseinrichtung (11) vorgesehen ist, mittels der das Bedienfeld (3; 31) zumindest bereichsweise beleuchtbar ist, **dadurch gekennzeichnet, dass** eine signaltechnisch mit der Beleuchtungseinrichtung (11) verbundene Stelleinrichtung (13) vorgesehen ist, mittels der in Abhängigkeit von der aktuellen Verkehrssituation des Fahrzeugs (2) die Beleuchtung des Bedienfelds (3; 31) selbsttätig derart einstellbar und/oder verstellbar ist, dass wenigstens ein Bedienelement (7; 33) des Bedienfelds (3; 31) von dem wenigstens einen weiteren Bedienelement (7; 33) des Bedienfelds (3; 31) optisch hervorgehoben und/oder optisch abgehoben ist, wobei jedes Bedienelement (7; 33) des Bedienfelds (3; 31) durch eine Taste gebildet ist, und dass die Tasten (7; 33) des Bedienfelds (3) druckbetätigbar und/oder durch Berührung betätigbar sind.

2. Vorrichtung nach Anspruch 1, **dadurch gekennzeichnet, dass** zur Ermittlung der aktuellen Verkehrssituation des Fahrzeugs (2) eine signaltechnisch mit der Stelleinrichtung (13) verbundene Positionsermittlungseinrichtung (15) vorgesehen ist, mittels der die aktuelle Position des Fahrzeugs (2) auf seiner Fahrstrecke ermittelbar ist, und/oder dass zur Ermittlung der aktuellen Verkehrssituation des Fahrzeugs (2) wenigstens eine signaltechnisch mit der Stelleinrichtung (13) verbundene Bild-Erfassungseinrichtung (17), insbesondere eine Kamera, vorgesehen ist, mittels der die Umgebung des Fahrzeugs (2) bildlich und/oder filmisch erfassbar ist.

3. Vorrichtung nach Anspruch 1 oder 2, **dadurch gekennzeichnet, dass** mittels der Stelleinrichtung (13) in Abhängigkeit von wenigstens einem Fahrerbefehl die Beleuchtung des Bedienfelds (3; 31) selbsttätig derart einstellbar und/oder verstellbar ist, dass wenigstens ein Bedienelement (7; 33) des Bedienfelds (3; 31) von dem wenigstens einen weiteren Bedienelement (7; 33) des Bedienfelds (3; 31) optisch hervorgehoben und/oder optisch abgehoben ist,
dass zur Erfassung des wenigstens einen Fahrerbefehls eine signaltechnisch mit der Stelleinrichtung (13) verbundene Fahrerbefehl-Erfassungseinrichtung (19) vorgesehen ist, mittels der wenigstens ein Fahrerbefehl zur optischen Hervorhebung wenigstens eines Bedienelements (7; 33) des Bedienfelds (3; 31) selbsttätig erfassbar und/oder erkennbar ist,
wobei bei der Erfassung eines Fahrerbefehls zur optischen Hervorhebung wenigstens eines Bedienelements (7; 33) des Bedienfelds (3; 31) die Beleuchtung des Bedienfelds (3; 31) mittels der Stelleinrichtung (13) selbsttätig derart einstellbar und/oder verstellbar ist, dass das wenigstens eine Bedienelement (7; 33) von dem wenigstens einen weiteren Bedienelement (7; 33) des Bedienfelds (3; 31) optisch hervorgehoben und/oder optisch abgehoben ist.

4. Vorrichtung nach Anspruch 3, **dadurch gekennzeichnet, dass** die Fahrerbefehl-Erfassungseinrichtung (19) eine Sprach-Erfassungseinrichtung (21) aufweist, mittels der wenigstens ein Sprachbefehl des Fahrers erfassbar ist, und/oder dass die Fahrerbefehl-Erfassungseinrichtung (19) eine Gesten-Erfassungseinrichtung (23) aufweist, mittels der wenigstens ein Gestenbefehl des Fahrers erfassbar ist.

5. Vorrichtung nach einem der vorhergehenden Ansprüche, **dadurch gekennzeichnet, dass** mittels der Stelleinrichtung (13) in Abhängigkeit von dem aktuellen Fahrerzustand die Beleuchtung des Bedienfelds (3; 31) selbsttätig derart einstellbar und/oder verstellbar ist, dass wenigstens ein Bedienelement (7; 33) des Bedienfelds (3; 31) von dem wenigstens einen weiteren Bedienelement (7; 33) des Bedienfelds (3; 31) optisch hervorgehoben und/oder optisch abgehoben ist, und
dass zur Ermittlung des aktuellen Fahrerzustands eine signaltechnisch mit der Stelleinrichtung (13) verbundene Körperzustand-Erfassungseinrichtung vorgesehen ist, mittels der wenigstens eine, insbesondere physiologische, Information über den aktuellen Körperzustand des Fahrers erfassbar ist, wobei bevorzugt vorgesehen ist, dass die Körperzustand-Erfassungseinrichtung eine Temperatur-Erfassungseinrichtung (30) aufweist, mittels der die Hauttemperatur des Fahrers und/oder die Innenraumtemperatur des Fahrzeugs (2) erfassbar ist.

6. Vorrichtung nach einem der vorhergehenden Ansprüche, **dadurch gekennzeichnet, dass** mittels der Stelleinrichtung (13) in Abhängigkeit von dem aktuellen Fahrerzustand die Beleuchtung des Bedienfelds (3; 31) selbsttätig derart einstellbar und/oder verstellbar ist, dass wenigstens ein Bedienelement (7; 33) des Bedienfelds (3; 31) von dem wenigstens einen weiteren Bedienelement (7; 33) des Bedienfelds (3; 31) optisch hervorgehoben und/oder optisch abgehoben ist, und
dass zur Ermittlung des aktuellen Fahrerzustands eine signaltechnisch mit der Stelleinrichtung (13) verbundene Stimmung-Erfassungseinrichtung (25) vorgesehen ist, mittels der die Stimmung des Fahrers erfassbar und/oder erkennbar ist, wobei bevorzugt vorgesehen ist, dass die Stimmung-Erfassungseinrichtung (25) eine Fahrermimik-Erfassungseinrichtung (27), mittels der die Mimik des Fahrers erfassbar und/oder erkennbar ist, und/oder eine Fahrweise-Erfassungseinrichtung (29), mittels der die Fahrweise des Fahrers erfassbar und/oder erkennbar ist, aufweist.

7. Vorrichtung nach einem der vorhergehenden Ansprüche, **dadurch gekennzeichnet, dass** das Bedienfeld durch ein druckbetätigbares Tastenfeld (3) gebildet ist, das mehrere druckbetätigbare Tasten (7) aufweist, oder dass das Bedienfeld durch ein durch Berührung betätigbares Tastenfeld gebildet ist, das mehrere durch Berührung betätigbare Tasten aufweist.

8. Vorrichtung nach einem der vorhergehenden Ansprüche, **dadurch gekennzeichnet, dass** mittels der Beleuchtungseinrichtung (11) wenigstens eine Taste (7; 33) des Bedienfelds (3; 31) beleuchtbar ist, wobei bevorzugt vorgesehen ist, dass mittels der Stelleinrichtung (13) die Beleuchtung der wenigstens einen Taste (7; 33) einstellbar und/oder verstellbar ist.

9. Vorrichtung nach Anspruch 8, **dadurch gekennzeichnet, dass** mittels der Stelleinrichtung (13) die Farbe und/oder die Helligkeit der Beleuchtung der wenigstens einen Taste (7; 33) verstellbar und/oder einstellbar ist, und/oder dass mittels der Stelleinrichtung (13) die Beleuchtung der wenigstens einen Taste (7; 33) einschaltbar und ausschaltbar ist.

10. Vorrichtung nach einem der Ansprüche 1 bis 6, **dadurch gekennzeichnet, dass** das Bedienfeld durch einen Touchscreen (31) gebildet ist, wobei der Touchscreen (31) mehrere Touchscreenbereiche (33) aufweist, an denen jeweils ein Funktionssymbol anzeigbar ist, wobei durch Berührung eines Touchscreenbereichs (33) eine dem Touchscreenbereich (31) zugeordnete Fahrzeugfunktion bedienbar ist, und wobei jeder Touchscreenbereich (33) eine durch Berührung betätigbare Taste ausbildet.

11. Vorrichtung nach Anspruch 10, **dadurch gekennzeichnet, dass** mittels der Stelleinrichtung (13) die Form und/oder die Gestalt und/oder die Farbe und/oder die Helligkeit wenigstens eines Funktionssymbols des Touchscreens (31) verstellbar und/oder einstellbar ist.

12. Verfahren zur Unterstützung eines Fahrers eines Fahrzeugs, insbesondere eines Nutzfahrzeugs, zum Betreiben einer Vorrichtung nach einem der vorhergehenden Ansprüche, mit einem mehrere Bedienelemente (7; 33) aufweisenden Bedienfeld (3; 31), wobei die Bedienelemente (7; 33) durch den Fahrer betätigbar sind, wobei jedem Bedienelement (7; 33) wenigstens eine Fahrzeugfunktion zugeordnet ist, die durch Betätigung des Bedienelements (7; 33) bedienbar ist, wobei eine Beleuchtungseinrichtung (11) vorgesehen ist, mittels der das Bedienfeld (3; 31) zumindest bereichsweise beleuchtbar ist, **dadurch gekennzeichnet, dass** eine signaltechnisch mit der Beleuchtungseinrichtung (11) verbundene Stelleinrichtung (13) vorgesehen ist, mittels der in Abhängigkeit von der aktuellen Verkehrssituation des Fahrzeugs (2) die Beleuchtung des Bedienfelds (3; 31) selbsttätig derart eingestellt und/oder verstellt wird, dass wenigstens ein Bedienelement (7; 33) des Bedienfelds (3; 31) von dem wenigstens einem weiteren Bedienelement (7, 33) des Bedienfelds (3; 31) optisch hervorgehoben und/oder optisch abgehoben ist, wobei jedes Bedienelement (7; 33) des Bedienfelds (3; 31) durch eine Taste gebildet ist, und dass die Tasten (7; 33) des Bedienfelds (3) druckbetätigbar und/oder durch Berührung betätigbar sind.

13. Fahrzeug, insbesondere Nutzfahrzeug, mit einer Vorrichtung nach einem der Ansprüche 1 bis 11 und/oder zur Durchführung eines Verfahrens nach Anspruch 12.

## Claims

1. Device for assisting a driver of a vehicle, in particular of a utility vehicle, having an operator control panel (3; 31) that has a plurality of operator control elements (7; 33), wherein the operator control elements (7; 33) can be activated by the driver, wherein each operator control element (7; 33) is assigned at least one vehicle function which can be operated by activating the operator control element (7; 33), wherein a lighting device (11) is provided, by means of which the operator control panel (3; 31) can be illuminated at least in certain areas, **characterized in that** an actuating device (13) which is connected by signalling technology to the lighting device (11) is provided, by means of which actuating device (13) the illumination of the operator control panel (3; 31) can be automatically set and/or adjusted as a function of the current traffic situation of the vehicle (2) in such a manner that at least one operator control element (7; 33) of the operator control panel (3; 31) is optically highlighted and/or optically contrasted by the least one further operator control element (7; 33) of the operator control panel (3; 31), **wherein** each operator control element (7; 33) of the operator control panel (3; 31) is formed by a push button key, and **in that** the push button keys (7; 33) of the operator control panel (3) can be activated by pressure and/or can be activated by touch.

2. Device according to Claim 1, **characterized in that** a position determination device (15) which is connected by signalling technology to the actuating device (13) is provided for the purpose of determining the current traffic situation of the vehicle (2), by means of which position determination device (15) the current position of the vehicle (2) on its route can be determined, and/or **in that** at least one image capture device (17), in particular a camera, which is connected by signalling technology to the actuating device (13) is provided for the purpose of determining the current traffic situation of the vehicle (2), by means of which image capture device (17) the surroundings of the vehicle (2) can be captured as images and/or a film.

3. Device according to Claim 1 or 2, **characterized in that** the illumination of the operator control panel (3; 31) can be automatically set and/or adjusted by means of the actuating device (13) as a function of at least one driver command in such a manner that at least one operator control element (7; 33) of the operator control panel (3; 31) is optically highlighted and/or optically contrasted by the at least one further operator control element (7; 33) of the operator control panel (3; 31),
**in that** a driver command-sensing device (19) which is connected by signalling technology to the actuating device (13) is provided for the purpose of sensing the at least one driver command, by means of which driver command-sensing device (19) at least one driver command for optically highlighting at least one operator control element (7; 33) of the operator control panel (3; 31) can be automatically sensed and/or detected,
wherein, upon sensing a driver command for optically highlighting at least one operator control element (7; 33) of the operator control panel (3; 31), the illumination of the operator control panel (3; 31) can be automatically set and/or adjusted by means of the actuating device (13) in such a manner that the at least one operator control element (7; 33) is optically highlighted and/or optically contrasted by the at least one further operator control element (7; 33) of the operator control panel (3; 31).

4. Device according to Claim 3, **characterized in that** the driver command-sensing device (19) has a voice-sensing device (21), by means of which at least one voice command of the driver can be sensed, and/or **in that** the driver command-sensing device (19) has a gesture-sensing device (23), by means of which at least one gesture command of the driver can be sensed.

5. Device according to one of the preceding claims, **characterized in that** the illumination of the operator control panel (3; 31) can be automatically set and/or adjusted by means of the actuating device (13) as a function of the current driver's state in such a manner that at least one operator control element (7; 33) of the operator control panel (3; 31) is optically highlighted and/or optically contrasted by the at least one further operator control element (7; 33) of the operator control panel (3; 31), and
**in that** a body state-sensing device which is connected by signalling technology to the actuating device (13) is provided for the purpose of determining the current driver's state, by means of which body state-sensing device at least one, in particular physiological, information item about the current body state of the driver can be sensed, wherein provision is preferably made for the body state-sensing device to have a temperature-sensing device (30), by means of which the skin temperature of the driver and/or the interior temperature of the vehicle (2) can be sensed.

6. Device according to one of the preceding claims, **characterized in that** the illumination of the operator control panel (3; 31) can be automatically set and/or adjusted by means of the actuating device (13) as a function of the current driver's state in such a manner that at least one operator control element (7; 33) of the operator control panel (3; 31) is optically highlighted and/or optically contrasted by the at least one further operator control element (7; 33) of the operator control panel (3; 31), and
**in that** a mood-sensing device (25) which is connected by signalling technology to the actuating device (13) is provided for the purpose of determining the current driver's state, by means of which mood-sensing device (25) the driver's mood can be sensed and/or detected, wherein provision is preferably made for the mood-sensing device (25) to have a driver facial expression-sensing device (27), by means of which the driver's facial expression can be sensed and/or detected, and/or to have a driving style-sensing device (29), by means of which the driver's driving style can be sensed and/or detected.

7. Device according to one of the preceding claims, **characterized in that** the operator control panel is formed by a keypad (3) which can be activated by pressure and has a plurality of push button keys (7) which can be activated by pressure, or **in that** the operator control panel is formed by a keypad which can be activated by touch and has a plurality of push button keys which can be activated by touch.

8. Device according to one of the preceding claims, **characterized in that** at least one push button key (7; 33) of the operator control panel (3; 31) can be illuminated by means of the lighting device (11), wherein provision is preferably made for the illumination of the at least one push button key (7; 33) to be able to be set and/or adjusted by means of the actuating device (13).

9. Device according to Claim 8, **characterized in that** the colour and/or the brightness of the illumination of the at least one push button key (7; 33) can be adjusted and/or set by means of the actuating device (13), and/or **in that** the illumination of the at least one push button key (7; 33) can be switched on and off by means of the actuating device (13).

10. Device according to one of Claims 1 to 6, **characterized in that** the operator control panel is formed by a touchscreen (31), wherein the touchscreen (31) has a plurality of touchscreen areas (33), on each of which a functional symbol can be displayed, wherein a vehicle function assigned to the touchscreen area (31) can be operated by touching a touchscreen area (33), and wherein each touchscreen area (33) forms a push button key which can be activated by touch.

11. Device according to Claim 10, **characterized in that** the form and/or the shape and/or the colour and/or the brightness of at least one functional symbol of the touchscreen (31) can be adjusted and/or set by means of the actuating device (13).

12. Method for assisting a driver of a vehicle, in particular of a utility vehicle, for operating a device according to one of the preceding claims, having an operator control panel (3; 31) that has a plurality of operator control elements (7; 33), wherein the operator control elements (7; 33) can be activated by the driver, wherein each operator control element (7; 33) is assigned at least one vehicle function which can be operated by activating the operator control element (7; 33), wherein a lighting device (11) is provided, by means of which the operator control panel (3; 31) can be illuminated at least in certain areas, **characterized in that** an actuating device (13) which is connected by signalling technology to the lighting device (11) is provided, by means of which actuating device (13) the illumination of the operator control panel (3; 31) is automatically set and/or adjusted as a function of the current traffic situation of the vehicle (2) in such a manner that at least one operator control element (7; 33) of the operator control panel (3; 31) is optically highlighted and/or optically contrasted by the least one further operator control element (7; 33) of the operator control panel (3; 31), wherein each operator control element (7; 33) of the operator control panel (3; 31) is formed by a push button key, and **in that** the push button keys (7; 33) of the operator control panel (3) can be activated by pressure and/or can be activated by touch.

13. Vehicle, in particular utility vehicle, having a device according to one of Claims 1 to 11 and/or for carrying out a method according to Claim 12.

## Revendications

1. Arrangement pour assister un conducteur d'un véhicule, notamment d'un véhicule utilitaire, comprenant un tableau de commande (3 ; 31) possédant plusieurs éléments de commande (7 ; 33), les éléments de commande (7 ; 33) pouvant être actionnés par le conducteur, au moins une fonction de véhicule étant attribuée à chaque élément de commande (7 ; 33), laquelle peut être commandée en actionnant l'élément de commande (7 ; 33), un dispositif d'éclairage (11) étant présent, au moyen duquel le tableau de commande (3 ; 31) peut être éclairé au moins dans certaines zones, **caractérisé en ce qu'**un dispositif de réglage (13) relié de manière signalétique au dispositif d'éclairage (11) est présent, au moyen duquel l'éclairage du tableau de commande (3 ; 31) peut être réglé et/ou positionné automatiquement en fonction de la situation de trafic actuel du véhicule (2) de telle sorte qu'au moins un élément de commande (7 ; 33) du tableau de commande (3 ; 31) est mis en valeur optiquement et/ou mis en retrait optiquement par rapport à l'au moins un élément de commande supplémentaire (7 ; 33) du tableau de commande (3 ; 31), chaque élément de commande (7 ; 33) du tableau de commande (3 ; 31) étant formé par une touche, et **en ce que** les touches (7 ; 33) du tableau de commande (3) peuvent être actionnées par pression et/ou peuvent être actionnées par le toucher.

2. Arrangement selon la revendication 1, **caractérisé en ce qu'**un dispositif de détermination de position (15) relié de manière signalétique au dispositif de réglage (13) en vue de la détermination de la situation de trafic actuel du véhicule (2), au moyen duquel peut être déterminée la position actuelle du véhicule (2) sur son parcours, et/ou **en ce qu'**au moins un dispositif de détection d'images (17), notamment une caméra, relié de manière signalétique au dispositif de réglage (13) en vue de la détermination de la situation de trafic actuel du véhicule (2) est présent, au moyen duquel l'environnement du véhicule (2) peut être détecté de manière imagée et/ou de manière filmée.

3. Arrangement selon la revendication 1 ou 2, **caractérisé en ce que** l'éclairage du tableau de commande (3 ; 31) peut être réglé et/ou positionné automatiquement au moyen du dispositif de réglage (13) en fonction d'au moins une instruction de conduite de telle sorte qu'au moins un élément de commande (7 ; 33) du tableau de commande (3 ; 31) est mis en valeur optiquement et/ou mis en retrait optiquement par rapport à l'au moins un élément de commande supplémentaire (7 ; 33) du tableau de commande (3 ; 31),
**en ce qu'**un dispositif de détection d'instruction de conduite (19) relié de manière signalétique au dispositif de réglage (13) en vue de la détection de l'au moins une instruction de conduite est présent, au moyen duquel peut être détectée et/ou reconnue automatiquement l'au moins une instruction de conduite en vue de la mise en valeur optique d'au moins un élément de commande (7 ; 33) du tableau de commande (3 ; 31),
lors de la détection d'une instruction de conduite, en vue de la mise en valeur optique d'au moins un élément de commande (7 ; 33) du tableau de commande (3 ; 31), l'éclairage du tableau de commande (3 ; 31) au moyen du dispositif de réglage (13) pouvant être réglé et/ou positionné automatiquement de telle sorte que l'au moins un élément de commande (7 ; 33) est mis en valeur optiquement et/ou mis en retrait optiquement par rapport à l'au moins un élément de commande supplémentaire (7 ; 33) du tableau de commande (3 ; 31).

4. Arrangement selon la revendication 3, **caractérisé en ce que** le dispositif de détection d'instruction de conduite (19) possède un dispositif de détection de la parole (21) au moyen duquel au moins une instruction vocale du conducteur peut être détectée, et/ou **en ce que** le dispositif de détection d'instruction de conduite (19) possède un dispositif de détection de gestes (23) au moyen duquel peut être détectée au moins une instruction gestuelle du conducteur.

5. Arrangement selon l'une des revendications précédentes, **caractérisé en ce que** l'éclairage du tableau de commande (3 ; 31) peut être réglé et/ou positionné automatiquement au moyen du dispositif de réglage (13) en fonction de l'état actuel du conducteur de telle sorte qu'au moins un élément de commande (7 ; 33) du tableau de commande (3 ; 31) est mis en valeur optiquement et/ou mis en retrait optiquement par rapport à l'au moins un élément de commande supplémentaire (7 ; 33) du tableau de commande (3 ; 31) et
**en ce qu'**un dispositif de détection d'état corporel relié de manière signalétique au dispositif de réglage (13) en vue de la détermination de l'état actuel du conducteur, au moyen duquel peut être détectée au moins une information, notamment physiologique, à propos de l'état corporel actuel du conducteur, en prévoyant de préférence que le dispositif de détection d'état corporel possède un dispositif de détection de température (30) au moyen duquel peut être détectée la température cutanée du conducteur et/ou la température de l'habitacle du véhicule (2).

6. Arrangement selon l'une des revendications précédentes, **caractérisé en ce que** l'éclairage du tableau de commande (3 ; 31) peut être réglé et/ou positionné automatiquement au moyen du dispositif de réglage (13) en fonction de l'état actuel du conducteur de telle sorte qu'au moins un élément de commande (7 ; 33) du tableau de commande (3 ; 31) est mis en valeur optiquement et/ou mis en retrait optiquement par rapport à l'au moins un élément de commande supplémentaire (7 ; 33) du tableau de commande (3 ; 31) et
**en ce qu'**un dispositif de détection d'humeur (25) relié de manière signalétique au dispositif de réglage (13) en vue de la détermination de l'état actuel du conducteur, au moyen duquel peut être détectée et/ou reconnue l'humeur du conducteur, en prévoyant de préférence que le dispositif de détection d'humeur (25) possède un dispositif de détection d'expression faciale de conducteur (27) au moyen duquel peut être détectée et/ou reconnue l'expression faciale du conducteur, et/ou un dispositif de détection de mode de conduite (29) au moyen duquel peut être détecté et/ou reconnu le mode de conduite du conducteur.

7. Arrangement selon l'une des revendications précédentes, **caractérisé en ce que** le tableau de commande est formé par un clavier (3) actionnable par pression, lequel possède plusieurs touches (7) actionnables par pression, ou **en ce que** le tableau de commande est formé par un clavier actionnable par le toucher, lequel possède plusieurs touches actionnables par le toucher.

8. Arrangement selon l'une des revendications précédentes, **caractérisé en ce qu'**au moins une touche (7 ; 33) du tableau de commande (3 ; 31) peut être éclairée au moyen du dispositif d'éclairage (11), en prévoyant de préférence que l'éclairage de l'au moins une touche (7 ; 33) peut être réglé et/ou positionné au moyen du dispositif de réglage (13).

9. Arrangement selon la revendication 8, **caractérisé en ce que** la couleur et/ou la luminosité de l'éclairage de l'au moins une touche (7 ; 33) peut être réglée et/ou positionnée au moyen du dispositif de réglage (13), et/ou **en ce que** l'éclairage de l'au moins une touche (7 ; 33) peut être allumé et éteint au moyen du dispositif de réglage (13).

10. Arrangement selon l'une des revendications 1 à 6, **caractérisé en ce que** le tableau de commande est formé par un écran tactile (31), l'écran tactile (31) possédant plusieurs zones d'écran tactile (33) au niveau desquelles peut respectivement être affiché un symbole de fonction, une fonction de véhicule attribuée à une zone d'écran tactile (31) pouvant être commandée par un toucher de la zone d'écran tactile (33), et chaque zone d'écran tactile (33) formant une touche pouvant être actionnée par le toucher.

11. Arrangement selon la revendication 10, **caractérisé en ce que** la forme et/ou la configuration et/ou la couleur et/ou la luminosité d'au moins un symbole de fonction de l'écran tactile (31) peut être positionnée et/ou réglée au moyen du dispositif de réglage (13).

12. Procédé pour assister un conducteur d'un véhicule, notamment d'un véhicule utilitaire, pour faire fonctionner un arrangement selon l'une des revendications précédentes, comprenant un tableau de commande (3 ; 31) possédant plusieurs éléments de commande (7 ; 33), les éléments de commande (7 ; 33) pouvant être actionnés par le conducteur, au moins une fonction de véhicule étant attribuée à chaque élément de commande (7 ; 33), laquelle peut être commandée en actionnant l'élément de commande (7 ; 33), un dispositif d'éclairage (11) étant présent, au moyen duquel le tableau de commande (3 ; 31) peut être éclairé au moins dans certaines zones, **caractérisé en ce qu'**un dispositif de réglage (13) relié de manière signalétique au dispositif d'éclairage (11) est présent, au moyen duquel l'éclairage du tableau de commande (3 ; 31) est réglé et/ou positionné automatiquement en fonction de la situation de trafic actuel du véhicule (2) de telle sorte qu'au moins un élément de commande (7 ; 33) du tableau de commande (3 ; 31) est mis en valeur optiquement et/ou mis en retrait optiquement par rapport à l'au moins un élément de commande supplémentaire (7 ; 33) du tableau de commande (3 ; 31), chaque élément de commande (7 ; 33) du tableau de commande (3 ; 31) étant formé par une touche, et **en ce que** les touches (7 ; 33) du tableau de commande (3) peuvent être actionnées par pression et/ou peuvent être actionnées par le toucher.

13. Véhicule, notamment véhicule utilitaire, comprenant un arrangement selon l'une des revendications 1 à 11 et/ou destiné à mettre en oeuvre un procédé selon la revendication 12.
